# EUROPEAN PATENT APPLICATION

(11) **EP 2 096 008 A1**
(43) Date of publication of application: **02.09.2009**
(21) Application number: 09000867.3
(22) Date of filing: 22.01.2009
(51) Int. Cl.: B60R 25/00, G07C 9/00, E05B 65/20

(54) **Keyless entry device**

(30) Priority: 29.02.2008 JP 2008049261
(71) Applicant: ALPS ELECTRIC CO., LTD., Tokyo 145-8501 (JP)
(72) Inventor: Nakasato, Mitsuharu, Tokyo 145-8501 (JP); Abe, Shinya, Tokyo 145-8501 (JP)
(74) Representative: Klunker . Schmitt-Nilson . Hirsch

(57) **Abstract**

To provide a keyless entry device which performs communication between a portable device and a vehicle-side device provided in a vehicle. The vehicle includes on a door a door handle provided with a grip portion having a grip shape, the grip portion of the door handle is provided with a vehicle-side electrode which detects an electric field induced in a human body by a portable device electrode, and the vehicle-side electrode has at least two of a first face which is opposed to a vehicle body face of the vehicle, a second face which is opposed to the vehicle body face of the vehicle and disposed at a position more distant from a vehicle body than the first face, and an upper face and a lower face which are orthogonal to the first face and the second face and parallel to each other. The vehicle-side electrode is composed of the faces other than the first face or formed to have the first face having a smaller area than other faces.

## Description

### Cross Reference to Related Application

The present invention contains subject matter related to Japanese Patent Application No. 2008-049261 filed in the Japanese Patent Office on February 29, 2008, the entire contents of which being incorporated herein by reference.

### BACKGROUND

### 1. Field of the Invention

The present invention relates to a keyless entry device which locks and unlocks a door by performing communication between a vehicle-side device and a portable device, and particularly to, a keyless entry device which generates an electric field in a human body by a transmission signal and detects the generated electric field to perform communication between a vehicle-side device and a portable device.

### 2. Description of the Related Art

Keyless entry devices include a vehicle-side device provided in a vehicle such as an automobile and perform wireless communication between the vehicle-side device and a portable device carried by a user to lock and unlock a door when the identification succeeds. There have been proposed keyless entry devices which perform communication between a vehicle-side device and a portable device with a human body interposed therebetween.

As a keyless entry device employing electric field communication, the present applicant proposes a device described in Japanese Patent Application No. 2006-230014 (Cross-Referenced US Patent Application No. 11/888718). The keyless entry device includes different electrodes provided on the sides of a surface (outer side) and a back surface (inner side, vehicle body side) of a door handle provided on a door of a vehicle and performs communication via the finger of the human body during the operation of the door handle to perform the identification and the like between a portable device and a vehicle-side device.

As the door handle, a door handle in which a handle body having a flap shape is pulled up, a door handle in which a handle body having a flap shape as above is pulled in a right or left direction, a door handle in which a grip portion having a grip shape is held and pulled to the front side, or the like is generally employed. In the above Japanese Patent Application No. 2006-230014, the keyless entry device is applied to a door handle including a grip-type grip portion.

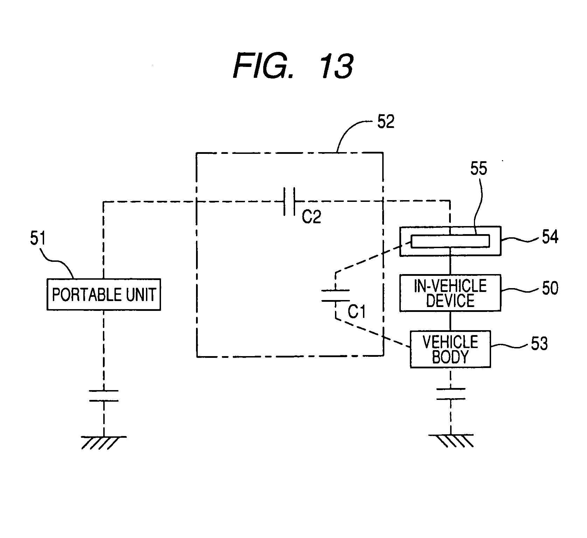

When the door is opened, the door handle including the grip-shaped grip portion is operated to be pulled by inserting the finger into the inner side of the grip portion, and when the door is closed, the door handle is operated to press the outer side of the grip portion with the hand. Fig. 13 shows a circuit diagram of the case where the grip portion is operated. In this drawing, a portion indicated by a broken line is an equivalent circuit and a portion indicated by a full line is an actual wired portion.

As shown in Fig. 13, when the grip portion is touched with the hand to be operated such that a human body 52 and a vehicle-side electrode 55 provided in a grip portion 54 of the vehicle are made to be close to each other, an equivalent circuit having C2 is formed between a portable device 51 carried by the user and a vehicle-side electrode 55 with the human body 52 interposed therebetween. At the same time, an equivalent circuit having C1 is also formed between the vehicle-side electrode 55 and a vehicle body 53 with the human body 52 interposed therebetween.

When a signal is sent from the portable device 51, the signal is transmitted to a vehicle-side device 50 via the human body 52 and the vehicle-side electrode 55. However, since the equivalent circuit having C1 is formed between the vehicle-side electrode 55 and the vehicle body 53, the signal is also transmitted to the side of C1. In a conventional keyless entry device employing electric field communication, the electrode has a flat plate shape that a surface and a back surface of the grip portion 54 have the same size. Accordingly, when the grip portion is operated to be pulled by inserting the finger into the inner side of the grip portion 54, the vehicle body and the electrode on the side of the back surface of the grip portion 54 are close to each other, and the human body 52 is present therebetween. Thus, C1 shown in Fig. 13 becomes large and most signals from the portable device 51 are transmitted to the equivalent circuit having C1. Accordingly, the vehicle-side device 50 cannot receive a sufficiently large size signal. In addition, the same problem occurs when the signal is sent to the portable device 51 from the vehicle-side device 50.

### SUMMARY

The invention is contrived in view of the above problems and an object of the invention is to provide a keyless entry device which can efficiently perform communication between a portable device and a vehicle by reducing as much as possible the influence of capacitance generated between a vehicle body and an electrode on the side of the vehicle with a human body interposed therebetween.

In order to solve the problems, a keyless entry device according to the invention performs communication between a portable device and a vehicle-side device provided in a vehicle. The portable device includes a portable device controller which performs communication of a signal for identification and a portable device electrode which induces an electric field generated by the signal from the portable device controller in a human body. The vehicle includes on a door a door handle provided with a grip portion having a grip shape, the grip portion of the door handle is provided with a vehicle-side electrode which detects the electric field induced in the human body by the portable device electrode, and the vehicle is provided with a vehicle-side controller to which the signal is input by the electric field detected by the vehicle-side electrode and which performs the identification of the signal. The vehicle-side electrode has at least two of faces from among a first face, a second face, an upper face and a lower face, the first face is opposed to a vehicle body face of the vehicle, the second face is opposed to the vehicle body face of the vehicle and disposed at a position more distant from the vehicle body than the first face, and the upper face and the lower face are orthogonal to the first face and the second face and parallel to each other. The vehicle-side electrode is composed of the faces other than the first face or formed to have the first face having a smaller area than other faces.

In the keyless entry device according to the invention, the vehicle-side electrode has the first face and the second face and the first face is formed to be shorter than the second face to reduce an area.

In the keyless entry device according to the invention, the grip portion is provided with supporting portions at both ends thereof, each of which is connected to the vehicle body, the supporting portion at one end of the grip portion includes a rotation center portion, the supporting portion at the other end of the grip portion is supported to be freely pulled out of the vehicle body to the outside, and the first face of the vehicle-side electrode is disposed to be close to the other end of the grip portion.

In the keyless entry device according to the invention, the vehicle-side electrode is composed of the faces other than the first face and has the upper face and the lower face, and the upper face and the lower face are connected to each other by a connecting face which is opposed to or orthogonal to the vehicle body.

In the keyless entry device according to the invention, the upper face and the lower face are formed in a triangle shape having an apex facing the vehicle body.

In the keyless entry device according to the invention, the grip portion is provided with supporting portions at both ends thereof, each of which is connected to the vehicle body, the supporting portion at one end of the grip portion includes a rotation center portion, the supporting portion at the other end of the grip portion is supported to be freely pulled out of the vehicle body to the outside, and apexes of the upper face and the lower face are disposed to be close to the other end of the grip portion.

In the keyless entry device according to the invention, the vehicle-side electrode has the second face and the second face has a slit formed at one end thereof.

In the keyless entry device according to the invention, the grip portion is provided with supporting portions at both ends thereof, each of which is connected to the vehicle body, the supporting portion at one end of the grip portion includes a rotation center portion, the supporting portion at the other end of the grip portion is supported to be freely pulled out of the vehicle body to the outside, and the slit of the second face is formed at one end of the grip portion.

According to the keyless entry device of the invention, the vehicle-side electrode has at least two faces from among the first face which is opposed to the vehicle body face of the vehicle, the second face which is opposed to the vehicle body face of the vehicle and disposed at a position more distant from the vehicle body than the first face, and the upper face and the lower face which are orthogonal to the first face and the second face and parallel to each other. Since the vehicle-side electrode is composed of the faces other than the first face or formed to have the first face having a smaller area than other faces, the face of the vehicle-side electrode, which is opposed to the vehicle body face, can be distantly positioned, and the face of the vehicle-side electrode, which is perpendicular to the vehicle body face, can be closely positioned, or the face of the vehicle-side electrode, which is opposed to the vehicle body face, can be reduced. In addition, capacitance generated between the vehicle body and the vehicle-side electrode with the finger interposed therebetween can be reduced and thus loss of the signal transmission can be reduced.

Further, according to the keyless entry device of the invention, the vehicle-side electrode has the first face and the second face and the first face is formed to be shorter than the second face to reduce an area. Accordingly, only by reducing the size of the face of the vehicle-side electrode, which is close to the vehicle body face, capacitance generated between the vehicle body and the vehicle-side electrode with the finger interposed therebetween can be reduced and the vehicle-side electrode can be easily formed.

Furthermore, according to the keyless entry device of the invention, the first face of the vehicle-side electrode is disposed to be close to the end opposite to the rotation center portion of the grip portion. Accordingly, the area of the electrode on the side that is not touched with the hand in the grip portion is reduced and the area opposed to the vehicle body is thus reduced, and the area of the electrode on the side that is held increases. Therefore, loss can be suppressed and the signal can be more efficiently transmitted.

Moreover, according to the keyless entry device of the invention, the vehicle-side electrode is composed of the faces other than the first face and has the upper face and the lower face, and the upper face and the lower face are connected to each other by a connecting face which is opposed to or orthogonal to the vehicle body. Accordingly, the vehicle-side electrode is easily formed by being bent.

In addition, according to the keyless entry device of the invention, the upper face and the lower face are formed in a triangle shape having an apex facing the vehicle body. Accordingly, by reducing as much as possible the portion of the vehicle-side electrode, which is close to the vehicle body face, loss of the signal transmission can be further reduced.

Further, according to the keyless entry device of the invention, the apexes of the upper face and the lower face are disposed to be close to the end opposite to the rotation center portion of the grip portion. Accordingly, the area of the electrode on the side that is not touched with the hand in the grip portion is reduced and the area of the electrode on the side that is held increases. Therefore, loss can be suppressed and the signal can be more efficiently transmitted.

Further, according to the keyless entry device of the invention, the vehicle-side electrode has the second face and the second face has a slit formed at one end thereof. Accordingly, the area which is opposed to the vehicle body can be reduced, and the face of the vehicle-side electrode, which is opposed to the finger, can increase. Therefore, the reduction of loss and the transmission efficiency can be balanced.

Furthermore, according to the keyless entry device of the invention, the slit of the second face is formed at the end on the side of the rotation center portion of the grip portion. Accordingly, the area of the electrode on the side that is not touched with the hand in the grip portion is reduced and the area opposed to the vehicle body is thus reduced, and the area of the electrode on the side that is held with the hand in the grip portion increases. Therefore, loss can be suppressed and the signal can be more efficiently transmitted.

### BRIEF DESCRIPTION OF THE DRAWINGS

Fig. 1 is a schematic view of a keyless entry device according to an embodiment;
Fig. 2 is a perspective view of a portable device;
Fig. 3 is a schematic view of a door handle provided outside a door;
Fig. 4 is a schematic view of the case where the door is opened from the state of Fig. 3;
Fig. 5 is a block diagram of the keyless entry device according to the embodiment;
Fig. 6 is a schematic side view of a vehicle and a grip portion;
Fig. 7 is a perspective view of a vehicle-side electrode of a first example;
Fig. 8 is a perspective view of a vehicle-side electrode of a second example;
Fig. 9 is a perspective view of a vehicle-side electrode of a third example;
Fig. 10 is a perspective view of a vehicle-side electrode of a fourth example;
Fig. 11 is a perspective view of a vehicle-side electrode of a fifth example;
Fig. 12 is a perspective view of a vehicle-side electrode of a sixth example; and
Fig. 13 is a circuit diagram of the case where the grip portion is operated.

### DESCRIPTION OF EXEMPLARY EMBODIMENTS

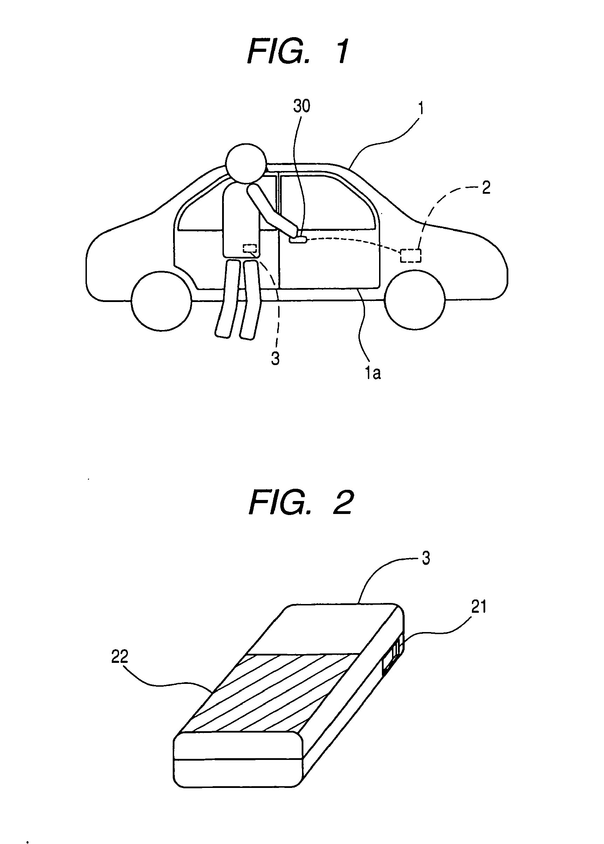

An embodiment of the invention will be described in detail on the basis of the drawings. Fig. 1 shows a schematic view of a keyless entry device according to this embodiment. As shown in the drawing, in the keyless entry device according to this embodiment, communication is performed via a human body between a vehicle-side device 2 provided in a vehicle 1 and a portable device 3 carried by a user to lock and unlock a door 1a by the identification of ID.

In Fig. 2, a perspective view of the portable device 3 is shown. As shown in the drawing, the portable device 3 is formed in a thin box shape as a whole and provided with a power source switch 21 at a side portion thereof. On a surface of the portable device 3, a portable device electrode 22 is disposed at an area indicated by hatching in the drawing. In the case where the portable device electrode 22 and the human body come into contact with or close to each other, an electric field can be induced in the human body from the portable device electrode 22. By detecting from the side of the vehicle 1 the electric field induced in the human body, the portable device 3 can perform communication with the vehicle-side device 2 via the human body. The arrangement of the portable device electrode 22 is not limited to that shown in Fig. 2, and the size and the area at which the portable device electrode is disposed can be arbitrarily set. The portable device electrode 22 may be disposed on the surface to be exposed and may be provided on an inner face near the surface of the portable device 3 to the extent that the electric field can be induced in the human body.

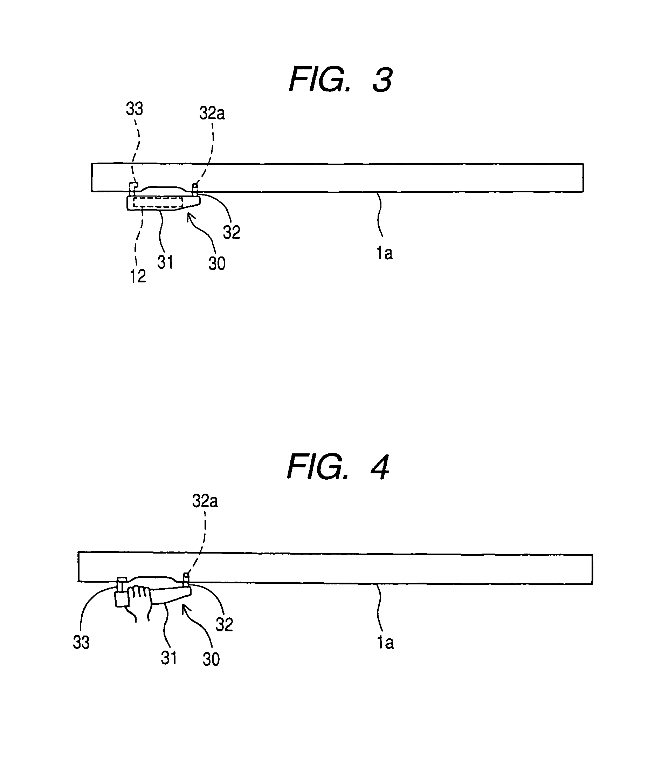

Fig. 3 is a schematic view showing a door handle 30 provided outside the door 1a. As shown in the drawing, the door handle 30 includes a grip portion 31 which has a grip shape and is exposed on an outer face of the door 1a and supporting portions 32 and 33 which protrude from both ends of the grip portion 31 to the door 1a constituting a part of a vehicle body and are supported by the door 1a. A vehicle-side electrode 12 made of metal is provided in the grip portion 31.

The supporting portion 32 provided at one end of the grip portion 31 is supported rotatably about a rotation center portion 32a in the door 1a. The supporting portion 33 provided at the other end of the grip portion 31 is supported to be freely pulled out of the door 1a. Fig. 4 is a schematic view showing the case where the door 1a is opened from the state of Fig. 3. When the door 1a is opened, the user holds and operates the grip portion 31 to be pulled to the front side. At this time, the grip portion 31 is rotated about one end thereof by a predetermined angle, such that the other end separates from the door 1 a. Accordingly, the user performs the operation by mostly holding with the hand a portion near the other end in which the supporting portion 33 of the grip portion 31 is provided. When the door 1a is closed, the user operates the grip portion 31 to press an outer face thereof.

When the user carrying the portable device 3 holds and operates the grip portion 31 to be pulled in order to open the door 1a from the outside of the vehicle, the electric field induced in the human body by the portable device electrode 22 of the portable device 3 can be detected by the vehicle-side electrode 12 in the grip portion 31. When the identification succeeds, the door 1a is unlocked. On the other hand, when the user carrying the portable device 3 operates the grip portion 31 to be pressed in order to close the door 1a, the electric field induced in the human body by the portable device electrode 22 of the portable device 3 can be detected by the vehicle-side electrode 12 in the grip portion 31. When the identification succeeds and the door 1a is closed, the door 1a is locked. In this case, the vehicle-side device 2 performs an unlocking operation when the door 1a is locked, and performs a locking operation when the door 1a is closed while being unlocked.

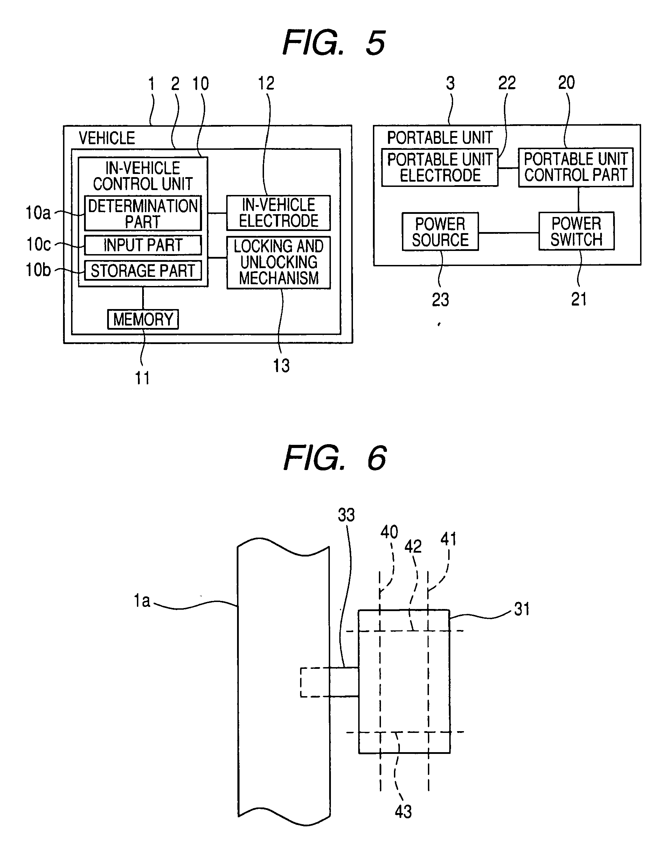

Fig. 5 shows a block diagram of the keyless entry device according to this embodiment. As shown in the drawing, the vehicle-side device 2 provided in the vehicle 1 includes a vehicle-side controller 10 which performs a variety of control operations, a memory 11 which stores data used for the vehicle-side controller 10, the above-described vehicle-side electrode 12, and a locking and unlocking mechanism 13 which performs locking and unlocking operations of the door 1a. In addition, the portable device 3 includes a portable device controller 20 which stores ID consisting of predetermined bits, performs a variety of control operations and modulates a signal to be output, a power source switch 21, the portable device electrode 22 and a power source 23. A signal indicating the ID and modulated is always repeatedly output to the portable device electrode 22.

The vehicle-side controller 10 includes a determination portion 10a which identifies the signal from the portable device 3, storage means 10b which temporarily stores data, and an input portion 10c which demodulates the signal on the basis of the detection of the electric field that is performed by each electrode and causes the storage means 10b to store the signal. The vehicle-side controller 10 can always receive the signal from the vehicle-side electrode 12.

The memory 11 provided in the vehicle-side device 2 stores a unique ID of the portable device 3 for the vehicle 1. The determination portion 10a of the vehicle-side controller 10 matches the ID included in the signal temporarily stored in the storage means 10b with the ID stored in the memory 11. When the IDs are matched, the determination portion determines that the identification succeeds, and when the IDs are not matched, the determination portion determines that the identification does not succeed.

Next, the structure of the vehicle-side electrode 12 provided in the grip portion 31 will be described in detail. Fig. 6 shows a schematic side view of the vehicle 1 and the grip portion 31. The vehicle-side electrode 12 is formed to have a plurality of faces in the grip portion 31. However, the vehicle-side electrode 12 has at least two of four faces intersecting with each other in the grip portion 31. Four broken lines shown in Fig. 6 indicate the positions of the faces, respectively, and each of the faces is a face perpendicular to the page including each of the broken lines of Fig. 6.

As shown in Fig. 6, the two faces among the four faces are opposed to the door 1a constituting the vehicle body. Among them, one face close to the door 1a is a first face 40 and the other face distant from the door 1a is a second face 41. The first face 40 and the second face 41 are opposed to each other. Further, the remaining two faces are an upper face 42 and a lower face 43 orthogonal to the first face 40 and the second face 41 and are parallel to each other.

The vehicle-side electrode 12 can obtain larger output by increasing as much as possible an area of a face opposed to the finger while the grip portion 31 is held with the hand to be operated or reducing the distance with the finger. On the other hand, capacitance generated between a vehicle body face and the vehicle-side electrode with the finger interposed therebetween can be reduced by not making or reducing a face opposed to the vehicle body face or keeping the face as far away from the vehicle body face and thus loss of the signal transmission can be reduced. Accordingly, the vehicle-side electrode 12 according to this embodiment is constituted by the faces other than the first face 40 among the four faces shown in Fig. 6. When the vehicle-side electrode has the first face 40, it is formed to have an area of the first face 40, which is smaller than them of other faces. Specifically, in this embodiment, one of the following first to sixth examples of the vehicle side-electrode 12 is employed.

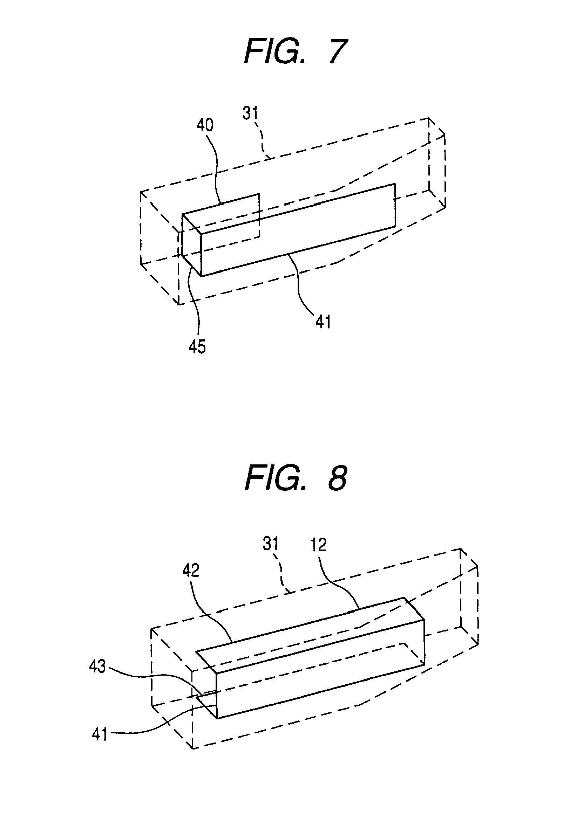

Fig. 7 shows a perspective view of the vehicle-side electrode 12 of the first example. Hereinafter, in Figs. 7 to 12, the grip portion 31 accommodating the vehicle-side electrode 12 is indicated by a broken line. In addition, although not shown in the drawings, the door 1a is disposed on the rear side, the supporting portions 32 is disposed on the right side, and the supporting portion 33 is disposed on the left side, that is touched by a person, in the drawings. In Fig. 7, the vehicle-side electrode 12 of the first example is constituted to have the first face 40 and the second face 41 among the four faces shown in Fig. 6. The first face 40 and the second face 41 are connected to each other by a side face 45 orthogonal to the first and second faces and the surface of the door 1a. The vehicle-side electrode 12 is formed by bending a metal plate.

In this example, the vehicle-side electrode 12 has the first face 40 and the first face is shorter than the second face 41. That is, the first face 40 is formed to have a smaller area than the second face 41. Accordingly, the face of the vehicle-side electrode 12 opposed to the vehicle body face is made relatively small and capacitance generated between the vehicle body and the vehicle-side electrode with the finger interposed therebetween can be reduced. Thus, loss of the signal transmission can be reduced. In addition, since the vehicle-side electrode 12 of this example has both of the first face 40 and the second face 41, the vehicle-side electrode is closely opposed to the finger in any of the case where the grip portion 31 is held while the door 1a is opened and the case where the grip portion 31 is pressed in order to close the door 1a, and thus the communication can be securely performed.

In Fig. 7, the grip portion 31 is provided with the supporting portion 32 which includes the rotation center portion 32a at one end on the right side of the drawing and the supporting portion 33 which is brought near to or away from the door 1a at the other end on the left side of the drawing. As described above, the user performs the operation by mostly holding with the hand the portion near the other end in which the supporting portion 33 of the grip portion 31 is provided. Since the vehicle-side electrode 12 is bent backward at the side in which the supporting portion 33 is provided, the first face 40 shorter than the second face 41 is disposed to be close to the side in which the supporting portion 33 of the grip portion 31 is provided. Accordingly, the first face 40 is disposed at a position held with the hand while the grip portion 31 is operated and thus the area of the vehicle-side electrode 12 opposed to the finger can be sufficiently ensured.

Fig. 8 shows a perspective view of the vehicle-side electrode 12 of the second example. In Fig. 8, the vehicle-side electrode 12 of the second example is constituted to have the second face 41, the upper face 42 and the lower face 43 among the four faces shown in Fig. 6. That is, in this example, the vehicle-side electrode 12 is formed not to have the first face 40. The second face 41, the upper face 42 and the lower face 43 of the vehicle-side electrode 12 are formed in a frame shape and the upper face 42 and the lower face 43 are bent so as to extend toward the door 1 a from upper and lower ends of the second face 41, respectively.

As described above, even when the vehicle-side electrode 12 is constituted by only the faces other than the first face 40 closely opposed to the vehicle body face, capacitance generated between the vehicle body and the vehicle-side electrode with the finger interposed therebetween can be reduced. Thus, loss of the signal transmission can be reduced. In addition, since the second face 41 is distant from the vehicle body face, the capacitance generated between the vehicle body and the vehicle-side electrode with the finger interposed therebetween is small. Furthermore, since the upper face 42 and the lower face 43 are faces in a direction perpendicular to the vehicle body face, the capacitance generated between the vehicle body and the vehicle-side electrode with the finger interposed therebetween is small. The vehicle-side electrode 12 of this example does not have the first face 40, but has the second face 41, the upper face 42 and the lower face 43, and thus while being opposed to the finger, the vehicle-side electrode can perform the communication when the door 1a is opened and closed.

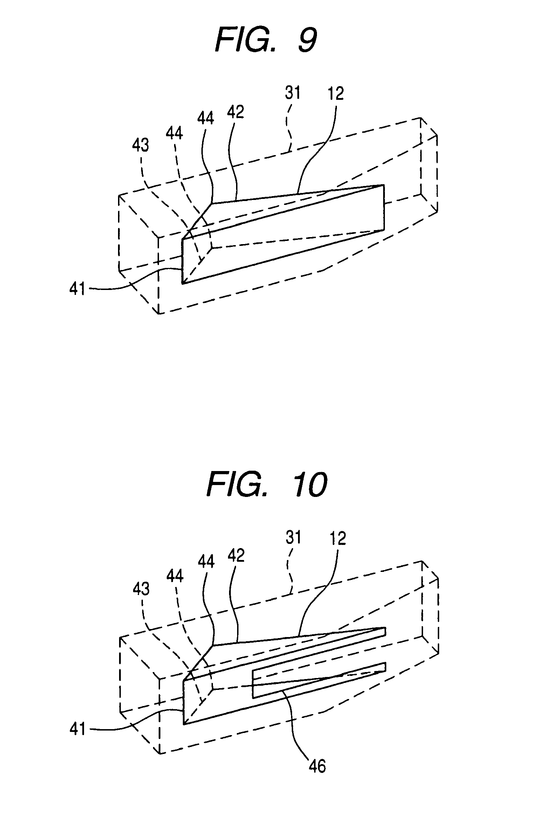

Fig. 9 shows a perspective view of the vehicle-side electrode 12 of the third example. The vehicle-side electrode 12 of the third example is constituted to have the second face 41, the upper face 42 and the lower face 43 among the four faces shown in Fig. 6, like the vehicle-side electrode 12 of the second example. The second face 41 is constituted as in the second example, but the upper face 42 and the lower face 43 are formed to have a triangle shape and have an apex 44 opposed to the door 1a, respectively. That is, as compared to the vehicle-side electrode 12 of the second example, the vehicle-side electrode 12 of this example has a shape such that the area on the side of the vehicle body face is cut, and loss of the signal transmission can be further reduced by reducing as much as possible the portion of the vehicle-side electrode 12, which is close to the vehicle body face. Also in this example, the vehicle-side electrode has the second face 41, the upper face 42 and the lower face 43, and thus, while being opposed to the finger, the vehicle-side electrode can perform the communication when the door 1a is opened and closed.

The apexes 44 are arranged to be close to one side in one of the right and left directions of the vehicle-side electrode 12. That is, among three sides constituting each of the upper face 42 and the lower face 43, one of two sides except one side in contact with the second face 41 is shorter and the other one is longer. Also in Fig. 9, the supporting portion 32 which includes the rotation center portion 32a is disposed on the right side of the drawing and thus the user performs the operation by mostly holding with the hand the portion near the left side of the drawing in which the supporting portion 33 of the grip portion 31 is provided. Since the upper face 42 and the lower face 43 of the vehicle-side electrode 12 are formed such that the apexes 44 are close to the side in which the supporting portion 33 is provided, the area of the vehicle-side electrode 12 opposed to the finger can be sufficiently ensured.

Fig. 10 shows a perspective view of the vehicle-side electrode 12 of the fourth example. The structure of the vehicle-side electrode 12 of this example is substantially the same as that of the vehicle-side electrode 12 of the third example shown in Fig. 9. A different point is that a slit 46 is formed over the range from one end to the center in a horizontal direction in the second face 41. As described above, since the slit 46 is formed in the second face 41 of the vehicle-side electrode 12 of this example, the area of the second face 41 opposed to the vehicle body face can be reduced and thus capacitance generated between the vehicle body and the vehicle-side electrode with the finger interposed therebetween is reduced and thus loss of the signal transmission can be further reduced. The loss of the signal transmission can be reduced as the slit 46 is made to be larger. However, since the area of the vehicle-side electrode 12 opposed to the human body is also reduced, the intensity of the signal detected by the vehicle-side electrode 12 and the loss of the signal transmission can be balanced by properly setting the size of the slit 46.

Furthermore, the slit 46 is formed on the side in which the supporting portion 32 including the rotation center portion 32a in the grip portion 31 is provided and the second face 41 is disposed to be close to the left side of the drawing in which the supporting portion 33 is provided. As described above, the user performs the operation by mostly holding with the hand the portion near the left side of the drawing in which the supporting portion 33 of the grip portion 31 is provided. Accordingly, the area of the vehicle-side electrode 12 opposed to the finger can be sufficiently ensured by the second face 41 disposed to be close to one side.

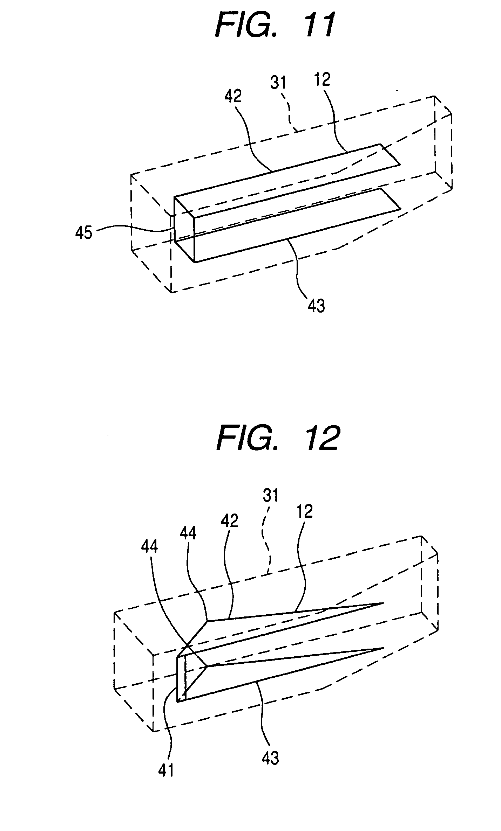

Fig. 11 shows a perspective view of the vehicle-side electrode 12 of the fifth example. In this example, the vehicle-side electrode 12 is constituted to have the upper face 42 and the lower face 43 among the four faces shown in Fig. 6 and not to have the first face 40 and the second face 41. The upper face 42 and the lower face 43 are connected to each other by the side face 45 orthogonal to the first and second faces and the surface of the door 1a. The vehicle-side electrode 12 is formed by bending a metal plate. According to the vehicle-side electrode 12 of this example, since the vehicle-side electrode does not have the first face 40 and the second face 41, the area opposed to the finger is slightly reduced when the door 1a is opened and closed. However, since there is no face opposed to the vehicle body face, capacitance generated between the vehicle body and the vehicle-side electrode with the finger interposed therebetween can be further reduced and loss of the signal transmission can be reduced.

Fig. 12 shows a perspective view of the vehicle-side electrode 12 of the sixth example. In the vehicle-side electrode 12 of this example, the upper face 42 and the lower face 43 are formed in a triangle shape and the second face 41 is formed to have a very narrow width. Since the upper face 42 and the lower face 43 are formed such that the apexes 44 of the upper face 42 and the lower face 43 are close to the side in which the supporting portion 33 is provided as in the case of the vehicle-side electrode 12 of the third example, the area of the vehicle-side electrode 12 opposed to the finger can be sufficiently ensured.

The embodiments of the invention have been described as above. The invention is not limited to the embodiments and can be modified in various forms without departing from the technical spirit and scope of the invention. For example, in this embodiment, the first face 40, the second face 41, the upper face 42 and the lower face 43 intersect with each other in the grip portion 31, as shown in Fig. 6, and the vehicle-side electrode 12 is accommodated in the grip portion 31.
However, one or more of the first face 40, the second face 41, the upper face 42 and the lower face 43 may overlap with the surface of the grip portion 31 and the vehicle-side electrode 12 may be exposed to the surface of the grip portion 31.

## Claims

1. A keyless entry device which performs communication between a portable device and a vehicle-side device provided in a vehicle,
wherein the portable device includes a portable device controller which performs communication of a signal for identification and a portable device electrode which induces an electric field generated by the signal from the portable device controller in a human body,
wherein the vehicle includes on a door a door handle provided with a grip portion having a grip shape, the grip portion of the door handle is provided with a vehicle-side electrode which detects the electric field induced in the human body by the portable device electrode, and the vehicle is provided with a vehicle-side controller to which the signal is input by the electric field detected by the vehicle-side electrode and which performs the identification of the signal,
wherein the vehicle-side electrode has at least two of faces from among a first face, a second face, an upper face and a lower face, the first face is opposed to a vehicle body face of the vehicle, the second face is opposed to the vehicle body face of the vehicle and disposed at a position more distant from the vehicle body than the first face, and the upper face and the lower face are orthogonal to the first face and the second face and parallel to each other, and
wherein the vehicle-side electrode is composed of the faces other than the first face or formed to have the first face having a smaller area than other faces.

2. The keyless entry device according to Claim 1,
wherein the vehicle-side electrode has the first face and the second face and the first face is formed to be shorter than the second face to reduce an area.

3. The keyless entry device according to Claim 1 or 2,
wherein the grip portion is provided with supporting portions at both ends thereof, each of which is connected to the vehicle body, the supporting portion at one end of the grip portion includes a rotation center portion, the supporting portion at the other end of the grip portion is supported to be freely pulled out of the vehicle body to the outside, and the first face of the vehicle-side electrode is disposed to be close to the other end of the grip portion.

4. The keyless entry device according to Claim 1,
wherein the vehicle-side electrode is composed of the faces other than the first face and has the upper face and the lower face, and the upper face and the lower face are connected to each other by a connecting face which is opposed to or orthogonal to the vehicle body.

5. The keyless entry device according to Claim 4,
wherein the upper face and the lower face are formed in a triangle shape having an apex facing the vehicle body.

6. The keyless entry device according to Claim 4 or 5,
wherein the grip portion is provided with supporting portions at both ends thereof, each of which is connected to the vehicle body, the supporting portion at one end of the grip portion includes a rotation center portion, the supporting portion at the other end of the grip portion is supported to be freely pulled out of the vehicle body to the outside, and apexes of the upper face and the lower face are disposed to be close to the other end of the grip portion.

7. The keyless entry device according to one of Claims 4 to 6,
wherein the vehicle-side electrode has the second face and the second face has a slit formed at one end thereof.

8. The keyless entry device according to Claim 7,
wherein the grip portion is provided with supporting portions at both ends thereof, each of which is connected to the vehicle body, the supporting portion at one end of the grip portion includes a rotation center portion, the supporting portion at the other end of the grip portion is supported to be freely pulled out of the vehicle body to the outside, and the slit of the second face is formed at one end of the grip portion.
